# EUROPÄISCHE PATENTSCHRIFT

(11) **EP 0 818 837 B1**
(45) Veröffentlichungstag und Bekanntmachung des Hinweises auf die Patenterteilung: **29.12.1999**
(21) Anmeldenummer: 96810442.2
(22) Anmeldetag: 09.07.1996
(51) Int. Cl.: H01M 2/16, H01M 2/18, H01M 10/24

(54) **Aufladbare Alkali-Mangan-Batterie sowie Verfahren zu deren Herstellung**
Rechargeable alkaline manganese oxyde battery and process for its manufacturing
Pile rechargeable alcaline à l'oxyde de manganèse et son procédé de fabrication

(43) Veröffentlichungstag der Anmeldung: 14.01.1998
(73) Patentinhaber: Leclanché S.A., CH-1401 Yverdon Kanton Waadt (CH)
(72) Erfinder: Larcin, José, 1441 Valeyres-sous-Montagny (CH); Ruetschi, Paul, 1421 Grandevent (CH)
(74) Vertreter: BOVARD AG - Patentanwälte

(56) Entgegenhaltungen:
- DE-A- 2 549 515
- DE-U- 8 712 989
- GB-A- 2 181 594
- US-A- 5 202 178
- PATENT ABSTRACTS OF JAPAN vol. 004, no. 141 (E-028), 4.Oktober 1980 & JP-A-55 093670 (MATSUSHITA ELECTRIC IND CO LTD), 16.Juli 1980,
- PATENT ABSTRACTS OF JAPAN vol. 014, no. 476 (E-0991), 17.Oktober 1990 & JP-A-02 195646 (FUJI ELELCTROCHEM CO LTD), 2.August 1990,
- PATENT ABSTRACTS OF JAPAN vol. 006, no. 222 (E-140), 6.November 1982 & JP-A-57 124850 (SUPAIRARU SHIGIYOU KK), 3.August 1982,

## Beschreibung

Die Erfindung betrifft eine aufladbare Batterie mit einer positiven Elektrode aus Mangandioxid, einer negativen Elektrode aus Zink, einem zwischen den Elektroden angeordneten Separator und einem alkalischen Elektrolyten.

Im weiteren betrifft die Erfindung ein Verfahren für den Verschluss des Separators.

Bevorzugte Ausführungsformen ergeben sich aus den abhängigen Ansprüchen.

Es ist seit langem bekannt, dass Alkali-Mangan-Primärbatterien in beschränkter Weise wiederaufladbar sind. Allerdings sollte zur Ladung nur ein spezielles Ladegerät verwendet werden, welches eine spannungsregulierte Ladung erlaubt. Die Ladespannung sollte auf etwa 1,7 V pro Zelle beschränkt werden. Im Buche « Batteries », Volume 1, Editor K. Kordesch, Herausgeber Marcel Decker, Inc., New York, 1974, Seite 311 wird z.B. hervorgehoben, dass eine spezielle Eigenschaft der Alkali-Mangan-(Primär)Batterien ihre relativ gute Aufladbarkeit sei.

Schon früh wurde versucht, die Aufladbarkeit noch weiter zu verbessern. Die amerikanische Firma Union Carbide brachte Ende der 60iger Jahre eine derartige Batterie mit verbesserter Aufladbarkeit auf den Markt. Im Handbuch « Eveready Battery Applications and Engineering Data » der Union Carbide Corp., New York, Seite 267 (1968); Seite 296 (1971), wird angegeben, dass mit dieser verbesserten Batterie etwa 50 Lade- und Entladezyklen erzielt werden können, wenn die entnommende Kapazität pro Zyklus auf 25 % der theoretischen Kapazität des Mangandioxids der positiven Elektrode begrenzt wird. Die theoretische Kapazität des Mangandioxids errechnet sich auf der Basis des Elektrodenprozesses MnO₂ + H₂O + e⁻ → MnOOH + OH⁻ zu 0.3 Ah pro Gramm MnO₂. Entnimmt man pro Entladung nur 25 % dieses Wertes, so erreicht man 50 Zyklen. Je mehr Kapazität pro Entladezyklus entnommen wird, desto kleiner ist die erzielbare Zyklenzahl.

Bezüglich des inneren Aufbaus unterscheiden sich Primärbatterien des Alkali-Mangan- Typs (für einmalige Entladung) von Sekundärbatterien dieses Systems nur geringfügig. Im obenerwähnten Buch « Batteries », Volume 1, aus dem Jahre 1974, heisst es auf Seite 283 : « Der Unterschied im Aufbau von Primär- und Sekundärbatterien ist nicht gross ». Aus dem Handbuch « Eveready Battery Applications and Engineering Data » aus dem Jahr 1968, bzw. 1971, geht aus den Schnittzeichnungen ein praktisch identischer Aufbau hervor, ausser der Tatsache, dass in der aufladbaren Version ein doppelschichtiger Separator eingezeichnet ist.

Auch die gegenwärtige Erfindung betrifft eine aufladbare Batterie, welche sich von einer entsprechenden Primärbatterie hauptsächlich durch den zwischen den Elektroden angeordneten Separator unterscheidet.

Die zahlreichen, in andere Richtungen gehenden Verbesserungsvorschläge der einschlägigen Patentliteratur seit 1974, bezüglich anderer Komponenten, wie z.B. Zusatz von Kupfer- oder Magnesiumpulver zur negativen Elektrode (US 3'042'732), Zusatz von Zement zur positiven Elektrode (US 3'113'050), Einsatz deformierbarer Plastikscheiben zur Abgrenzung des Gasraumes von den Elektroden (US 3'288'642), Zusatz von leitfähigen Bindemittel zur positiven Elektrode (US 3'945'847), Begrenzung der Entladekapazität der Zinkelektrode auf weniger als 60 % der Kapazität der positiven Elektrode (US 3'716'411) oder auf weniger als 33 % der Entladekapazität der Mangandioxidelektrode (US 4'091'178), Verwendung einer starren Umhüllung für die positive Elektrode um deren Volumenexpansion zu beschränken (US 4'384'029), Zusatz von Titanoxid zum Mangandioxid (Deutsche Offenlegungsschrift DE 33'37'568 A1), Zusatz von Wismutoxid zur Mangandioxidelektrode (Europäische Patentschriften 0 146 201 und 0 147 033), haben sich in der Praxis als nicht sehr wirksam, oder unpraktisch, erwiesen.

Der wichtigste Faktor bleibt nach wie vor der Separatoraufbau. Die wichtige Rolle, welche der Separator bei aufladbaren Alkali-Mangan-Batterien spielt, erklärt sich wie folgt :

Beim Aufladen wird in der negativen Elektrode Zinkoxid zu metallischem Zink reduziert. Das Zink entsteht dabei in dendritischer Form und kann deshalb Kurzschlüsse durch den Separator hervorrufen. Aus diesem Grunde muss der Sparator eine Membranschicht enthalten, welche zwar ionendurchlässig ist, aber nur so kleine Poren aufweist, nämlich z.B. kleiner als etwa 0,2 µm im Durchmesser, so dass keine Kurzschlüsse entstehen können. Der Separator muss wenigstens eine der Elektroden in Form einer Tasche umhüllen. Bei handelsüblichen, zylindrischen Zellen ist die Separatortasche röhrenförmig ausgebildet. Die Separatorröhre ist an ihrem unteren Ende, welches dem Boden des Gehäusebechers zugewandt ist, dicht verschlossen, damit auch dort keine Kurzschlüsse entstehen können. Dem Verschluss der Separatorröhre muss besondere Beachtung geschenkt werden.

In der Schweizer Patentschrift CH-669 479 wurde vorgeschlagen, die Separatorröhre mittels eines elekrolytbeständigen Schmelzklebers (Hot Melt Adhesive) zu verschliessen. Gemäss dieser Patentschrift bildet der Schmelzkleber am Boden der Separatorröhre einen dichten Verguss, welcher die Membranschicht der Separatorröhre kontaktiert.

Auf der gleichen Grundidee, nämlich der Verwendung eines Schmelzklebers, basieren auch die späteren Patentschriften US 5'108'852, US 5'272'020 und US 5'462'819, welche spezielle Ausführungsformen des Verschlusses beschreiben.

Obwohl durch Verwendung eines Schmelzklebers das Ziel eines dichten Verschlusses erreicht wird, hat diese Methode erhebliche Nachteile. Man benötigt hierzu eine Einrichtung zur Erhitzung des Schmelzklebers über seinen Schmelzpunkt (je nach Typ des Schmelzklebers 80 bis 180 °C). Dabei sollte die Temperatur möglichst genau reguliert sein. Des weitern benötigt man eine Dosierpumpe, um die benötigte Menge des erhitzten, flüssigen Schmelzklebers in die Separatortasche oder in den Boden der Batterie zu dosieren. Das Verfahren wird sowohl durch den Unterhalt dieser Einrichtungen, als auch die Materialkosten für den Schmelzkleber, verteuert. Ein weiterer Nachteil dieser Methode ist der beträchtliche Volumenverlust, welcher durch den Schmelzkleber verursacht wird. Das durch den Schmelzkleber beanspruchte Volumen könnte stattdessen mit Vorteil für zusätzliches Expansionsvolumen, oder zusätzlichen Elektrolyt, verwendet werden, wodurch erhöhte Auslaufsicherheit und Belastbarkeit erzielt werden könnten.

Aufgabe der Erfindung ist demanch ein schmelzkleberfreier, volumensparender, preisgünstiger, in sehr kurzer Zeit bewerkstellbarer Verschluss der Separatortasche für eine aufladbare Alkali-Mangan-Batterie.

Dies wird erfindungsgemäss dadurch erzielt, dass der Separator aus wenigstens einer Schicht von ionendurchlässiger Membran (6) und wenigstens einer filzartigen und saugfähigen Schicht (7) besteht, dass die filzartige und saugfähige Schicht (7) wenigstens teilweise aus thermisch aufschmelzbarem Kunststoff besteht, dass der Separator taschenförmig ausgebildet und am unteren Ende verschlossen ist, dass der Verschluss (13, 14) einzig aus Separatormaterial selbst besteht, wobei er durch mechanische und thermische Verformung des unteren Endes des Separators (6, 7) bewirkt ist, und wenigstens einzelne Teilchen des schmelzbaren Kunststoffes der Filzschicht gegenseitig, und mit der Membranschicht, infolge der thermischen Einwirkung verklebt sind.

Gemäss der Erfindung bildet der Separator, bestehend aus mindestens einer ionendurchlässigen Membranschicht, und mindestens einer filzartigen und saugfähigen Schicht, welche thermisch aufschmelzbaren Kunststoff enthält, eine Tasche die an ihrem unteren Ende durch mechanisches Zusammendrücken und thermisches Verformen des Separatormaterials verschlossen ist. Der Separatorverschluss besteht also selber aus Separatormaterial, und wird ohne jegliche Zugabe von Schmelzkleber bewirkt.

Ausführungsbeispiele der Erfindung sollen anhand der Zeichnungen 1 bis 6 erläutert werden.

Fig. 1 stellt ein Schnittbild durch eine erfindungsgemässe aufladbare Alkali-Mangan-Batterie zylindrischer Bauart dar.

Fig. 1a stellt ein Detail der Batterie gemäss Fig. 1 dar.

Fig. 2 zeigt den ersten Schritt zur Fertigung der Separatorröhre für eine zylindrische Batterie.

Fig. 3 und 4 stellen weitere Schritte bei der Fertigung der Separatorröhre dar.

Fig. 5 zeigt wie der Separator durch thermische Verformung verschlossen wird.

Fig. 6 zeigt schematisch einen vergrösserten Schnitt durch den Separatorverschluss.

Gemäss Fig. ist die positive Elektrode (10) ein zylindrischer Ringkörper, welcher hauptsächlich aus Mangandioxid besteht. Dem Mangandioxid sind 5 bis 15 % Graphit, etwas Kalilauge sowie kleine Mengen von Bindemittel oder Schmiermittel beigefügt, welche das Pressen des Ringkörpers erleichtern. Die positive Elektrode ist praktisch identisch mit derjenigen, welche üblicherweise in Alkali-Mangan-Primärbatterien Verwendung findet. Die positive Elektrode (10) ist vom äusseren Stahlbecher (12) umgeben, mit welchem sie in elektrischem Kontakt steht, und welcher den positiven Pol bildet. Die positive Elektrode (10) ist von der negativen Elektrode (11) durch den Separator (6, 7) getrennt. Der Separator besteht aus mindestens einer filzartigen, elektrolytaufsaugenden Schicht aus Kunststofflasern (7) und mindestens einer ionendurchlässigen Membranschicht (6). Der Separator ist röhrenförmig ausgebildet und weist unten einen dichten Verschluss (13, 14) auf. Die negativen Elektrode (11) besteht aus einer Mischung von gelierter Kalilaugelösung und Zinkpulver. Das Geliermittel ist z.B. Carboxymethylzellulose. Die Zusammensetzung der negativen Elektrode (11) ist praktisch identisch mit derjenigen, welche für Alkali-Mangan-Primär-batterien Verwendung findet. Durch den Kontaktnagel (9) ist die negative Elektrode (11) mit dem Deckel (1) verbunden, welcher den negativen Pol bildet. Das Kunststoffdichtungselement (2) isoliert den Deckel (1) vom Batteriebecher (12). Ein Expansionsraum (3, 4) über den Elektroden erlaubt die Aufnahme von zusätzlichem Elektrolyt oder Gas, welche beim Laden aus den Elektroden austreten können. Der Elektrolyt aus etwa 40%iger Kalilauge, in welcher etwas Zinkoxid gelöst ist, benetzt den Separator (6, 7) sodass beidseitig dünne Elektrolytfilme (5, 8) die Elektroden kontaktieren.

Alle Batterienkomponenten, mit Ausnahme der Separatorröhre, sind weitgehend identisch mit handelsüblichen Komponenten, die zum Bau von Alkali-Mangan-Primärzellen eingesetzt werden. Im Vergleich mit den Eingangs erwähnten aufladbaren Batterien aus den Jahren 1968 oder 1971, macht sich die erfindungsgemässe Batterie natürlich die inzwischen realisierten Fortschritte auf dem Gebiete der Alkali-Mangan-Primärbatterien zu Nutze, insbesondere z.B. die Verwendung hochreiner, indiumdotierter, quecksilberfreier Zinkpulver, die erhöhte Reinheit des Elektrolyten und der Oberfläche des Kontaktnagels in der negativen Elektrode, Massnahmen welche die Entwicklung von Wasserstoff unterdrücken, sowie die verbesserte Technik des Batterieverschlusses, einschliesslich Sicherheitsberststelle, welche ein durch allfälligen Ueberdruck verursachtes, explosionsartiges Aufsprengen der Batterie verhindert.

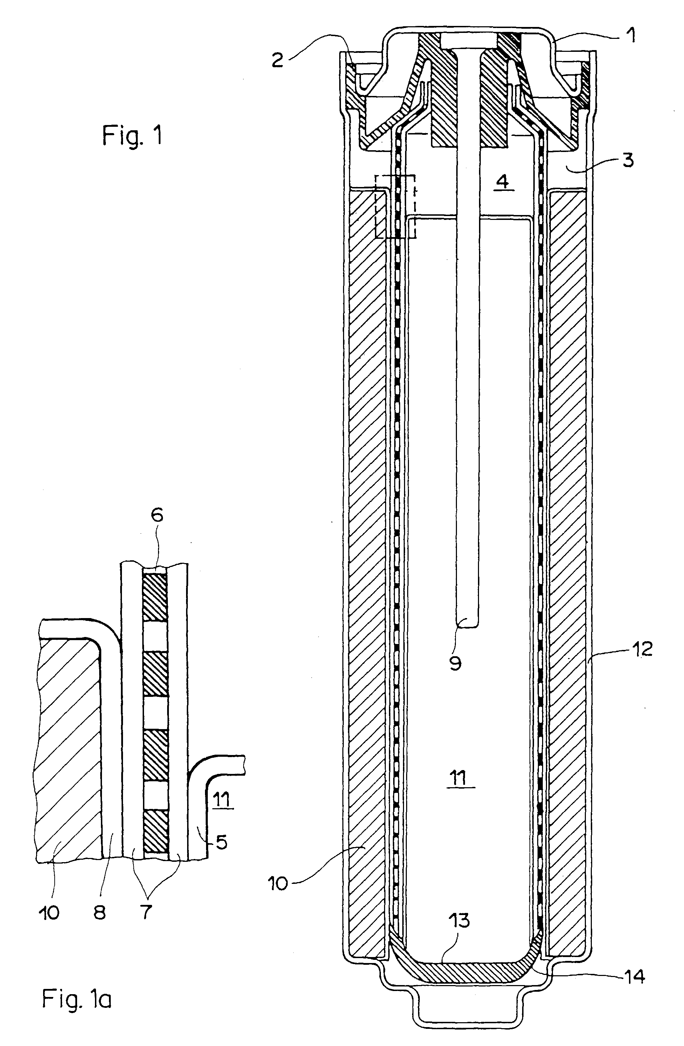

Fig. 1a zeigt ein in Fig. 1 strichliert eingerahmtes Detail der Batterie.

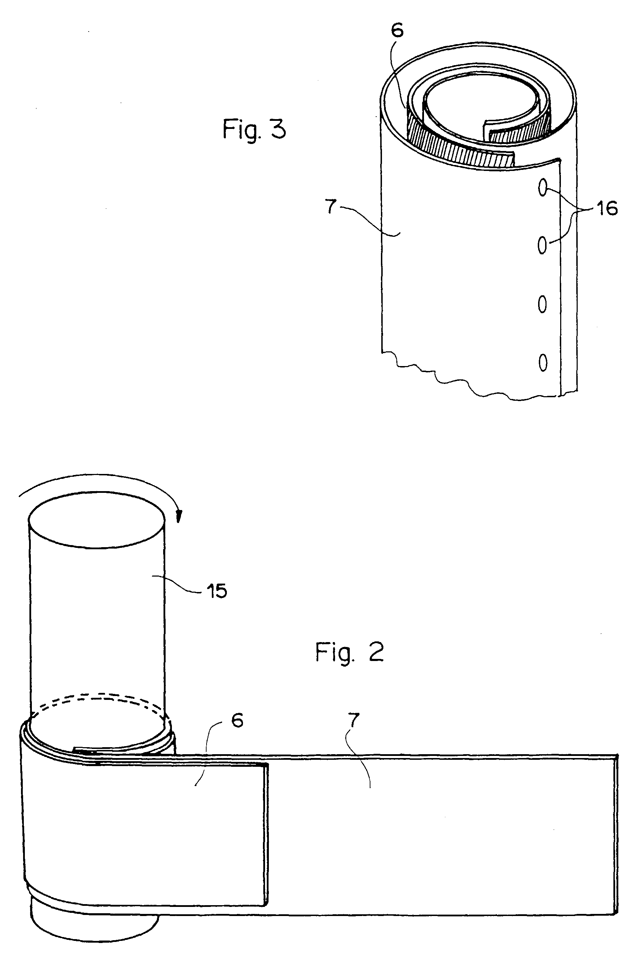

In Fig. 2 bis 5 wird der erfindungsgemässe Separator für eine zylindrische Batterie, sowie seine Herstellung, erläutert. Die auf die gewünschte Länge geschnittenen Separatorbänder (6, 7) werden gemäss Fig. 2 auf einen Dorn (15) gewickelt, dessen Durchmesser demjenigen der zu fabrizierenden Separatorröhre entspricht.

Die Separatorröhre besteht aus mindestens zwei Schichten, nämlich der ionendurchlässigen Membran (6) und der filzartigen Schicht (7). Die ionendurchlässige Membran ist beispielsweise eine Folie aus regenerierter Zellulose. Diese sollte vorzugsweise schwefel- und glyzerinfrei sein. Zellulosefolie ist z.B. unter der Markenbezeichnung (Courtaulds) 350-P-00 erhältlich. Anstelle, oder kombiniert mit Zellulosefolie, können erfindungsgemäss ionendurchlässige Membranen aus Polyäthylen-Methacrylsäure-Kopolymeren verwendet werden, welche unter dem Markennamen « Permion » im Handel sind. Auch mikroporöse Polyäthylen- oder Polypropylenfilme des Typs « Celgard » mit Porengrössen unter 0.2 µm können als ionendurchlässige Membran dienen. Erhältlich sind des weiteren Folien welche aus einer Viskoseschicht auf einer dünnen Filzunterlage bestehen. Faserverstärkte Zellulosemembranen dieser Art finden in der Nahrungsmittelindustrie Verwendung.

Die ionendurchlässige Membran (6) wird entweder auf die filzartige Schicht (7) aufgeklebt, oder einfach vor dem Aufrollen auf die Filzschicht (7) gelegt, wie dies Fig. 2 darstellt.

Dabei kann z.B. die filzartige Schicht (7) eine Windung länger sein als die Membranschicht (6), so dass nach dem Wickeln der Separatorröhre die Membranschicht (6) aussen und innen von der Filzschicht (7) umgeben ist, wie dies in Fig. 3 dargestellt ist. Dadurch ist die Membranschicht (6) beidseitig mechanisch geschützt. Falls die Membranschicht (6) nur etwas mehr als eine einzige Windung umfasst, müsste dann die Filzschicht (7) etwas mehr als zwei Windungen umfassen. Das Ende (16) der Filzschicht (7) wird mittels Klebstoff oder durch thermisches Schweissen auf der darunterliegenden Windung der Filzschicht befestigt, wodurch sich das Wiederentrollen der Separatorröhre vermeiden lässt.

Das untere Ende (17) der Separatorröhre wird erfindungsgemäss durch mechanisches Einbiegen, und thermisches Verkleben einzelner Teilchen der Filzschicht, verschlossen.

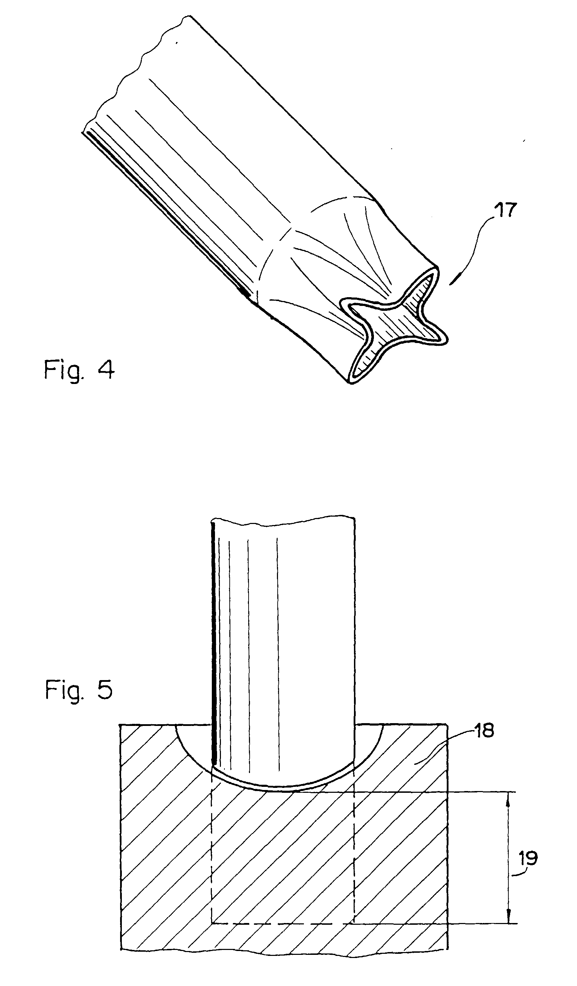

Hierzu wird zunächst das untere Ende (17) der Röhre beispielsweise sternförmig zusammengedrückt, wie dies Fig. 4 darstellt. Auch andere Formen des mechanischen Zusammendrückens sind möglich.

Das mechanische Verformen dient dem Zweck, den nachfolgenden Schritt des thermischen Verformens und Verklebens zu erleichtern. Das letztere wird bewerkstelligt indem das untere Ende der Separatorröhre für kurze Zeit gegen ein aufgeheiztes Werkstück (18) gepresst wird, wie dies in Fig. 5 dargestellt ist. Durch kurzzeitigen Kontakt mit der heissen Oberfläche verkleben sich die aufschmelzbaren Teilchen der filzartigen Schicht gegenseitig und die ionendurchlässige Membran wird zwischen den verklebten Teilchen der Filzschicht eingebettet, wobei diese auch mit der Membranschicht verklebt wird. So entsteht ein für Zinkdendriten undurchlässiger Verschluss, und zwar sowohl am Boden (13) als auch am untersten Ende der Seitenwand (14) der Separatorröhre.

Natürlich schliesst die Erfindung auch andere Anordnungen der Separatorschichten ein, als die in Fig. 2 und 3 dargestellten. So können abwechslungsweise mehrere Filz- oder Membranschichten aufeinandergelegt werden. Das Abschneiden auf die benötigte Länge kann auch erst erfolgen, wenn die Röhre schon teilweise gewickelt ist.

Durch die in Fig. 5 dargestellte Operation des thermischen Verformens und Verklebens wird die ursprüngliche Länge der Separatorröhre verkürzt. Für eine Separatorröhre von beispielsweise 8 - 9 mm Durchmesser kann die Verkürzung (19) bis zu 10 mm betragen. Die Verkürzung (19) entspricht in diesem Beispiel etwa dem Durchmesser der Separatorröhre. Allerdings sind dies nur ungefähre Zahlen. Die zu wählende Verkürzung hängt auch vom Material der Filzschicht und vom Aufbau der Separatorröhre ab.

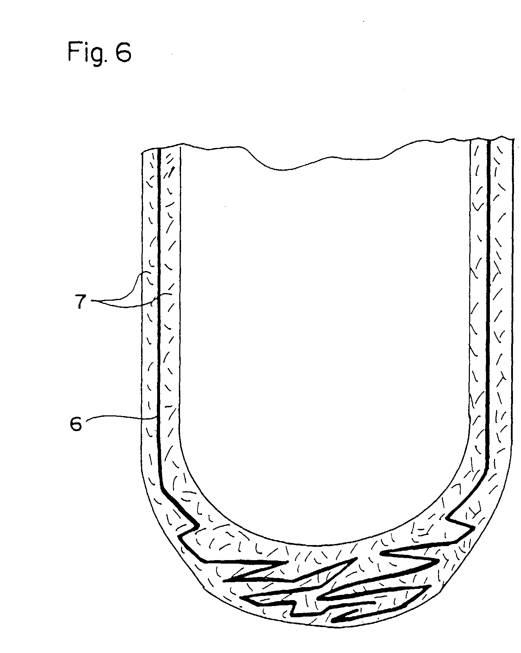

Beim thermischen Verformen und Verkleben werden die thermisch aufschmelzbaren Fasern oder Teilchen der Filzschicht untereinander, und mit der Membranschicht, verklebt. wie dies in Fig. 6 in Vergrösserung schematisch dargestellt ist. Fig. 6 zeigt, dass die Bodenschicht dicker als die Wandstärke der Separatorröhre, und dass die Membranschicht (6) des Separators im Verschluss labyrinthmässig in die Filzschicht (7) eingefaltet und mit ihr verklebt ist. Die filzartige Schicht muss, gemäss Erfindung, wenigstens zum Teil aus Teilchen bestehen, welche sich thermisch aufschmelzen lassen.

Geeignete Materialien hiezu sind z.B. Polyvinylalkohol, Polyvinylacetat, Polyamid, Polypropylen und Acrylo-Nitril-Polymere. Die Fasern können, zwecks besserer Benetzbarkeit, mit Acrylsäure beschichtet sein. Handelsübliche, filzartige Separatoren bestehen oft aus Mischungen verschiedener solcher Fasern und enthalten auch Zellulosefasern und Bindemittel.

Je nach Zusammensetzung der Filzschicht beträgt die Temperatur an der Oberfläche des heissen Werkstücks (18) 250 bis 350 °C. Temperatur und Kontaktzeit werden so gewählt, dass ein optimaler Verschluss erzielt wird.

Die Erfindung umfasst den grundsätzlichen Gedanken, den Seperatorverschluss aus dem Separatormaterial selbst « in situ » zu erzeugen. Ueberraschenderweise wurde festgestellt, dass dies auch gelingt, wenn der Separator zusätzlich zur Filzschicht auch noch eine Membranschicht enthält. Der Klebstoff für den erfindungsgemässen Verschluss besteht also aus Teilchen der Filzschicht. Es kann genügen, auch nur einen Teil des aufschmelzbaren Materials der Filzschicht aufzuschmelzen. Durch das Zusammendrücken und Erhitzen des unteren Teils der Separatorröhre muss lediglich eine genügende Verdichtung der Filzschicht und ein Verkleben mit der Membranschicht erreicht werden, so dass der Verschluss der Separatortasche für Zinkdendriten undurchdringbar wird.

Um eine genügende Menge aufschmelzbaren Materials zu gewährleisten, kann auch so vorgegangen werden, dass beim Wickeln der Separatorröhre nach Fig. 2 die Filzschicht (7) breiter ist als die Membranschicht (6), und insbesondere am unteren Ende über die Membranschicht hinausragt. Dadurch steht beim Erzeugen des Separatorverschlusses mehr aufschmelzbares Filzmaterial zur Verfügung um die Membranschicht einzubetten.

Für die Herstellung einer erfindungsgemässen Batterie zylindrischer Bauart nach Fig. 1 werden zunächst vorgepresste, zylindrische Ringe (10) aus Mangandioxid-Graphit-Mischung in den Stahlbecher (12) eingeschoben. Die Mangandioxid-Graphit-Mischung kann auch direkt im Stahlbecher zu einem zylindrischen Ringkörper (10) verpresst werden.

Die Separatorröhre wird separat, gemäss Fig. 2 bis 4 gefertigt. Die Fertigungsschritte sind :
- Wickeln der Separatorröhre
- mechanischen Einbördeln des unteren Endes
- thermisches Aufschmelzen von Fasern oder Teilchen der Filzschicht durch Kontakt mit einer heissen Oberfläche, welche die gewünschte Form aufweist.

Dann wird die fertige Separatorröhre (6, 7) in die Batterie hineingeschoben, wie aus Fig. 1 ersichtlich ist. Der nächste Schritt ist das Zudosieren von Kalilaugeelektrolyt. Danach wird eine genügende Zeitspanne eingeräumt, damit der Elektrolyt vom Separator (6, 7) und der positiven Elektrode (10) aufgesogen werden kann. Es bilden sich Elektrolytfilme (5, 8) zu beiden Seiten des Separators. Dann folgt die Zudosierung des Zink-Kalilauge-Gels (11), welches die negative Elektrode bildet. Sowohl die positive (10), als auch die negative Elektrode (11) sind bezüglich Zusammensetzung und Menge ähnlich wie diejenigen, welche in Alkali-Mangan-Primärbatterien seit jeher Verwendung finden. Schliesslich wird der vormontierte Oberteil bestehend aus Deckel (1), Dichtungselement (2) und Kontaktnagel (9) aufgesetzt und die Batterie durch Einbördeln des oberen Randes des Stahlbechers (12) verschlossen.

Wenn sich auch die beschriebenen Beispiele speziell auf eine zylindrische Batterie mit einer ringförmig gepressten, äusseren, positiven Elektrode, und einer zylindrischen, negativen, inneren Elektrode beziehen, ist die Erfindung nicht auf diese Ausführungsform beschränkt. So können die Elektroden z.B. aus dünnen Bändern bestehen, welche zusammen mit zwei Separatorbändern spiralförmig gewickelt sind. Dabei sind die Separatorbänder etwas breiter als die Elektroden und reichen deshalb insbesondere auf der unteren Seite des Wickels über diese hinaus. Die hervorstehenden Ränder der spiralförmig gewickelten Separatoren werden gemäss Erfindung auf der unteren Seite des Wickels zusammengedrückt, indem sie für kurze Zeit gegen ein heisses Werkstück gepresst werden. Dabei verkleben sich die Fasern oder Teilchen der Filzschicht gegenseitig und betten die Membran ein, so dass über den gesamten Boden des Wickels ein dichter Verschluss entsteht. Statt einer röhrenförmigen Separatortasche hat man in diesem Falle eine spiralförmig ausgebildete Separatortasche erzeugt.

In ähnlicher Weise lässt sich die Erfindung auf Batterien mit plattenförmigen Elektroden anwenden. Die Separatorbänder werden um die Platten gewickelt, so dass sie auf der unteren Seite über die Platten hinaus vorstehen. Die Platten werden zu einem Stack aufgeschichtet. Der Verschluss erfolgt durch Zusammendrücken der unten vorstehenden Separatorränder, und durch thermische Einwirkung, so dass sich die Fasern oder Teilchen der Filzschicht gegenseitig verkleben und die Membranschicht dicht einbetten. Dies geschieht, indem die untere Seite des Elektroden-Separatoren Stacks kurzzeitig auf eine heisse Oberfläche gedrückt wird.

## Patentansprüche

1. Aufladbare Batterie mit einer positiven Elektrode (10) aus Mangandioxid, einer negativen Elektrode (11) aus Zink, einem zwischen den Elektroden angeordneten Separator (6, 7) und einem alkalischen Elektrolyten, wobei der Separator aus wenigstens einer Schicht von ionendurchlässiger Membran (6) und wenigstens einer filzartigen und saugfähigen Schicht (7) besteht, dadurch gekennzeichnet, dass die filzartige und saugfähige Schicht (7) wenigstens teilweise aus thermisch aufschmelzbarem Kunststoff besteht, dass der Separator taschenförmig ausgebildet und am unteren Ende verschlossen ist, dass der Verschluss (13, 14) einzig aus Separatormaterial selbst besteht, wobei er durch mechanische und thermische Verformung des unteren Endes des Separators (6, 7) bewirkt ist, und wenigstens einzelne Teilchen des schmelzbaren Kunststoffes der Filzschicht gegenseitig, und mit der Membranschicht, infolge der thermischen Einwirkung verklebt sind.

2. Aufladbare Batterie nach Anspruch 1 dadurch gekennzeichnet, dass die ionendurchlässige Membran (6) eine Zellulosefolie ist.

3. Aufladbare Batterie nach Anspruch 1 dadurch gekennzeichnet, dass die filzartige Schicht (7) wenigstens teilweise aus Polyvinylalkohol besteht.

4. Aufladbare Batterie nach einem der vorangehenden Ansprüche, dadurch gekennzeichnet, dass die Batterie zylindrischer Bauart ist, dass die positive Elektrode (10) eine röhrenförmige, und die negative Elektrode (11) eine zylindrische Form hat, dass der dazwischenliegende Separator (6, 7) röhrenförmig ausgebildet ist und an seinem unteren Ende durch mechanische und thermische Einwirkung zu einem dichten Verschluss (13, 14) verformt ist.

5. Aufladbare Batterie nach Anspruch 1 dadurch gekennzeichnet, dass die Elektroden aus dünnen Bändern bestehen welche zusammen mit zwei Separatorenbändern spiralförmig gewickelt sind, dass die Separatorbänder breiter sind als die Elektrodenbänder und dass die hervorstehenden Ränder des Separators am unteren Ende des Wickels durch mechanische und thermische Einwirkung zu einem dichten Verschluss verformt sind.

6. Aufladbare Batterie nach Anspruch 1 dadurch gekennzeichnet, dass die Elektroden plattenförmig ausgebildet sind, dass wenigstens die Platten der einen Elektrode mit dem Separator umgewickelt sind und dass die Separatoren am unteren Ende des Plattensatzes durch mechanische und thermische Einwirkung zu einem dichten Verschluss verformt sind.

7. Verfahren zur Herstellung einer aufladbaren Batterie nach Anspruch 4, gekennzeichnet durch folgende, nicht ausschliessliche Verfahrensschritte für die Fabrikation des röhrenförmigen Separators :
- Aufwickeln der Separatorschichten auf einen Dorn (15) zwecks Bildung der Separatorröhre
- mechanisches Zusammendrücken des unteren Endes (17) der Separatorröhre
- thermisches Verformen des unteren Endes der Separatorröhre durch Kontakt mit einer heissen Oberfläche, welche die gewünschte Form für den Separatorverschluss aufweist, wobei die thermisch aufschmelzbaren Teilchen der filzartigen Schicht wenigstens teilweise aufgeschmolzen und miteinander und mit der Membranschicht verklebt werden

8. Verfahren zur Herstellung einer aufladbaren Batterie nach Anspruch 7, dadurch gekennzeichnet, dass die heisse Oberfläche eine Temperatur von 250 bis 350 °C aufweist.

9. Verfahren zur Herstellung einer aufladbaren Batterie nach Anspruch 5 gekennzeichnet durch folgende, nicht ausschliessliche Verfahrensschritte :
- Aufwickeln einer bandförmigen positiven Elektrode, eines bandförmigen Separators, einer bandförmigen negativen Elektrode und eines zweiten bandförmigen Separators zu einem Wickel,
- mechanisches Zusammendrücken des unteren, über die Elektrode hinaus hervorstehenden Randes der Separatorbänder und thermisches Verformen durch kurzzeitigen Kontakt mit einer heissen Oberfläche wodurch wenigstens einzelne Teilchen des thermisch aufschmelzbaren Materials der Filzschicht sich gegenseitig und mit der Membranschicht verkleben.

10. Verfahren zur Herstellung einer aufladbaren Batterien nach Anspruch 6, gekennzeichnet durch folgende, nicht ausschliessliche Verfahrensschritte für ihre Fabrikation :
- Umwickeln von wenigstens den Platten der einen Elektrode mit Separator, in einer Weise, dass der Separator über den unteren Rand der Platten hinausragt,
- mechanisches Zusammendrücken und Verformen des herausragenden Randes der filzartigen Separatorschicht, durch Kontakt mit einer heissen Oberfläche, so dass wenigstens einzelne Teilchen des aufschmelzbaren Kunststoffs in der Filzschicht des Separators gegenseitig und mit der Membranschicht verklebt werden.

## Claims

1. Rechargeable battery with a positive electrode (10) of manganese oxide, a negative electrode (11) of zinc, a separator (6, 7) disposed between the electrodes and an alkaline electrolyte, the separator consisting of at least one layer of ion-permeable membrane (6) and at least one felt-like and absorbent layer (7) characterised in that the felt-like and absorbent layer (7) consists at least partially of thermally meltable synthetic material, in that the separator is designed pocket-shaped and is sealed at the lower end, in that the seal (13, 14) consists solely of separator material itself, it being achieved through mechanical and thermal deformation of the lower end of the separator (6, 7), and at least individual particles of the meltable synthetic material of the felt layer are stuck together mutually and with the membrane layer as a result of the thermal influence.

2. Rechargeable battery according to claim 1, characterised in that the ion-permeable membrane (6) is a cellulose foil.

3. Rechargeable battery according to claim 1, characterised in that the felt-like layer (7) consists at least partially of polyvinyl alcohol.

4. Rechargeable battery according to one of the preceding claims, characterised in that the battery is of cylindrical construction, in that the positive electrode (10) has a tubular and the negative electrode (11) a cylindrical form, in that the separator (6, 7) lying there-between is designed tubular, and is deformed at its lower end into a tight seal (13, 14) through mechanical and thermal influence.

5. Rechargeable battery according to claim 1, characterised in that the electrodes consist of thin bands which are wound helically together with two separator bands, in that the separator bands are wider than the electrode bands and in that the protruding edges of the separator at the lower end of the coil are deformed into a tight seal through mechanical and thermal influence.

6. Rechargeable battery according to claim 1, characterised in that the electrodes are designed plate-shaped, in that at least the plates of the one electrode are wound with the separator and in that the separators are deformed into a tight seal at the lower end of the plate group through mechanical and thermal influence.

7. Method of producing a rechargeable battery according to claim 4, characterised by following, non-exclusive methodical steps for the manufacture of the tubular separator:
- - winding the separator layers on a pin (15) for the purpose of forming the separator tube,
- - mechanical compression of the lower end (17) of the separator tube,
- - thermal deformation of the lower end of the separator tube through contact with a hot surface, which has the form desired for the separator seal, the thermally meltable particles of the felt-like layer being at least partially melted and stuck together with each other and with the membrane layer.

8. Method for producing a rechargeable battery according to claim 7, characterised in that the hot surface has a temperature of 250 to 350 °C.

9. Method of producing a rechargeable battery according to claim 5, characterised by the following, non-exclusive methodical steps:
- coiling a band-shaped positive electrode, a band-shaped separator, a band-shaped negative electrode and a second band-shaped separator into a coil,
- mechanical compression of the lower edge of the separator bands projecting beyond the electrode and thermal deformation through short contact with a hot surface whereby at least individual particles of the thermally meltable material of the felt layer stick together mutually and with the membrane layer.

10. Method of producing a rechargeable battery according to claim 6, characterised by the following, non-exclusive methodical steps for its manufacture:
- winding of at least the plates of the one electrode with separator, in a way that the separator projects over the lower edge of the plates,
- mechanical compression and deformation of the projecting edge of the felt-like separator layer, through contact with a hot surface, so that at least individual particles of the meltable synthetic material in the felt layer of the separator are stuck together mutually and with the membrane layer.

## Revendications

1. Pile rechargeable comportant une électrode positive (10) en oxyde de manganèse, une électrode négative (11) en zinc, un séparateur (6, 7) placé entre les électrodes et un électrolyte alcalin, le séparateur étant constitué par au moins une couche d'une membrane (6) perméable aux ions et au moins une couche (7) feutrée et absorbante, caractérisée en ce que la couche (7) feutrée et absorbante est constituée, au moins en partie, par de la matière plastique pouvant être déposée par fusion thermique, que le séparateur a la forme d'une poche dont l'extrémité inférieure est fermée, que le bouchon (13, 14) est constitué uniquement par la même matière que le séparateur lui-même et réalisé par déformation mécanique et thermique de l'extrémité inférieure du séparateur (6, 7), au moins certaines particules de la matière plastique fusible de la couche feutrée étant collées, sous l'action de la chaleur, entre elles et avec la couche de la membrane.

2. Pile rechargeable selon la première revendication, caractérisée en ce que la membrane (6) perméable aux ions est une feuille de cellulose.

3. Pile rechargeable selon la première revendication, caractérisée en ce que la couche feutrée (7) est, au moins en partie, en polyvinyl alcool.

4. Pile rechargeable selon l'une des revendications précédentes, caractérisée en ce que cette pile est de forme cylindrique, que l'électrode positive (10) est tubulaire et l'électrode négative (11) cylindrique, que le séparateur (6, 7) qui est intercalé entre les deux est tubulaire, son extrémité inférieure étant déformée, par action mécanique et thermique, pour constituer un bouchon étanche (13, 14).

5. Pile rechargeable selon la première revendication, caractérisée en ce que les électrodes sont constituées par des bandes minces enroulées en spirale avec deux bandes séparatrices, en ce que les bandes séparatrices sont plus larges que les bandes des électrodes et en ce que les bords du séparateur qui dépassent à l'extrémité inférieure de l'enroulement prennent, par action mécanique et thermique, la forme d'un bouchon étanche.

6. Pile rechargeable selon la première revendication, caractérisée en ce que les électrodes sont en forme de plaques, qu'au moins les plaques de l'une des électrodes sont enroulées avec le séparateur et que, à l'extrémité inférieure de l'ensemble de plaques, les séparateurs prennent, par action mécanique et thermique, la forme d'un bouchon étanche.

7. Procédé de fabrication d'une pile rechargeable selon la revendication 4, caractérisé par les opérations suivantes, non exclusives, de fabrication du séparateur tubulaire :
- enroulement des couches du séparateur sur un mandrin (15) pour former le tube du séparateur
- compression mécanique de l'extrémité inférieure (17) du tube séparateur
- déformation thermique de l'extrémité inférieure du tube séparateur par contact avec une surface très chaude ayant la forme souhaitée pour le bouchon du séparateur, les particules, fusibles par la chaleur, de la couche feutrée, étant fondues au moins en partie et collées entre elles ainsi qu'à la couche formant la membrane.

8. Procédé de fabrication d'une pile rechargeable selon la revendication 7, caractérisé en ce que la surface chaude présente une température de 250 à 350 °C.

9. Procédé de fabrication d'une pile rechargeable selon la revendication 5, caractérisé par les opérations non exclusives suivantes :
- enroulement d'une électrode positive en forme de ruban, d'un séparateur en forme de ruban, d'une électrode négative en forme de ruban et d'un deuxième séparateur en forme de ruban, pour obtenir une bobine,
- compression mécanique du bord inférieur des bandes du séparateur qui dépassent de l'électrode et déformation thermique par un bref contact avec une surface très chaude, ce qui a pour effet qu'au moins certaines des particules de la couche feutrée fusibles par la chaleur se collent entre elles ainsi qu'à la couche formant la membrane.

10. Procédé de fabrication d'une pile rechargeable selon la revendication 6, caractérisé par les opérations suivantes :
- enroulement au moins des plaques de l'une des électrodes avec le séparateur, de telle manière que le séparateur dépasse du bord inférieur des plqaues,
- compression et déformation mécaniques du bord de la couche séparatrice feutrée qui dépasse, par contact avec une surface très chaude, de telle manière qu'au moins certaines particules de la matière plastique fusible, dans la couche feutrée du séparateur, se collent les unes aux autres et avec la couche formant la membrane.
